# FASCICULE DE BREVET EUROPEEN

(11) **EP 3 286 776 B1**
(45) Date de publication et mention de la délivrance du brevet: **10.08.2022**
(21) Numéro de dépôt: 16719341.6
(22) Date de dépôt: 18.04.2016
(51) Int. Cl.: H01H 33/22, H02B 13/02

(54) **PROCÉDÉ ET SYSTÈME DE DISTRIBUTION D'UN MÉLANGE**
VERFAHREN UND SYSTEM ZUR VERTEILUNG EINER MISCHUNG
METHOD AND SYSTEM FOR DISTRIBUTING A MIXTURE

(30) Priorité: 24.04.2015 FR 1553729
(43) Date de publication de la demande: 28.02.2018
(73) Titulaire: Dehon S.A., 75011 Paris (FR)
(72) Inventeur: MOROTE, Christophe, 34830 Jacou (FR); MAREE, Fabien, 69007 Lyon (FR); DEHON, Christophe, 69003 Lyon (FR); SOLER, Jean-Paul, 69130 Ecully (FR)
(74) Mandataire: Argyma
(86) Numéro de dépôt international: PCT/EP2016/058576
(87) Numéro de publication internationale: WO 2016/169896

(56) Documents cités:
- DE-A1- 2 556 768
- DE-A1- 3 148 258
- DE-U1-202009 018 239
- FR-A1- 2 983 341

## Description

### DOMAINE TECHNIQUE GENERAL ET ART ANTERIEUR

La présente invention concerne le domaine de la distribution d'un mélange de gaz, en particulier, un mélange de gaz adapté pour assurer l'isolation électrique et/ou éteindre un arc électrique dans un appareil électrique moyenne ou haute tension.

De manière classique, un réseau de distribution électrique comporte des équipements haute tension (de l'ordre de 145 kV) qui peuvent être déconnectés du réseau par un dispositif de coupure électrique haute tension. Afin de limiter la formation d'arcs électriques, un dispositif de coupure électrique comporte de manière connue une enceinte étanche dans laquelle sont logés des composants électriques adaptés pour permettre une déconnexion électrique. L'enceinte étanche comporte en outre un milieu gazeux assurant l'isolation électrique et/ou l'extinction des arcs électriques susceptibles de se produire dans cette enceinte lors de la déconnexion.

Actuellement, le gaz le plus souvent utilisé dans un dispositif de coupure électrique est l'hexafluorure de soufre (SF₆). Ce gaz est chimiquement inerte et non toxique pour l'homme. Toutefois il présente un fort potentiel de réchauffement planétaire (PRP = 22800) et il a été inscrit sur la liste des gaz dont les émissions doivent être limitées dans le protocole de Kyoto (1997). Plus récemment son utilisation a été visée par le règlement (UE) N° 517/2014 (F-Gas II). Aussi, il a été proposé de remplacer le gaz SF₆ par de nouveaux produits chimiques organiques plus respectueux de l'environnement, par exemple, l' heptafluoroisobutyronitrile.

En pratique, ces nouveaux produits chimiques organiques de coupure électrique ne sont utilisables qu'à l'état de gaz. Pour éviter une liquéfaction dans un dispositif de coupure électrique en fonction de la température de celui-ci, un produit de coupure électrique est mélangé avec un «gaz de dilution» tels que le dioxyde de carbone, l'azote, l'oxygène, l'air et leurs mélanges. Ce mélange permet de former une atmosphère d'isolation électrique stable. Le produit chimique organique de coupure électrique et le gaz de dilution doivent être dosés de manière précise afin d'obtenir un mélange aux qualités d'isolation électrique désirée.

Pour remplir une enceinte étanche d'un appareil de coupure électrique avec du SF₆ stocké dans un récipient, il faut prélever de manière continue la phase gazeuse dudit récipient pour la distribuer dans ladite enceinte étanche. Cette méthode n'est pas applicable aux nouveaux produits chimiques organiques de coupure électrique.

En effet, le produit de coupure électrique et le gaz de dilution ne se distribuent pas de manière homogène au cours du prélèvement de la phase gazeuse du récipient, ce qui modifie le dosage et affecte les performances d'isolation électrique. En pratique, le produit de coupure électrique est moins présent dans la phase gazeuse que dans la phase liquide du récipient du fait de sa faible pression de vapeur saturante à 20°C (appelée également tension de vapeur). Compte tenu des conditions variables de distribution (température entre -30°C à +50°C), il est difficile de garantir une concentration précise de produit de coupure électrique et de gaz de dilution à la sortie du récipient (variation d'au moins 8%), ce qui diminue l'efficacité du produit de coupure électrique et présente un premier inconvénient. En outre, lorsqu'un tel mélange est extrait d'un récipient, la masse du mélange en phase gazeuse qui est exploitable est de l'ordre de 20 à 30 % en poids, ce qui représente un deuxième inconvénient.

En référence à la figure 1, pour éliminer cet inconvénient, il a été proposé par la demande de brevet FR2995462 d'utiliser un circuit mélangeur de gaz 100 permettant de contrôler le rapport entre le produit de coupure électrique G1 et le gaz de dilution G2 lors du remplissage de l'enceinte 10 d'un appareil électrique 1. A cet effet, le circuit mélangeur de gaz 100 est équipé de débitmètres massiques de précision pour surveiller la concentration en produit de coupure électrique injecté. Sans parler du coût d'un tel circuit mélangeur de gaz 100, cette solution est complexe à mettre en oeuvre car il est nécessaire de stocker séparément le produit de coupure électrique G1 et le gaz de dilution G2. De plus, la distribution est lente par comparaison à ce qui est connu dans l'art antérieur pour la distribution de SF₆, ce qui présente un autre inconvénient.

De manière incidente, les documents DE2556768A1 et DE 3148258A1 concernent une installation de commutation haute tension remplie d'un gaz d'isolation. Afin de régler le problème des variations de pression dans l'installation, ces documents enseignent de prévoir un échangeur de chaleur dans l'installation afin de contrôler la température du gaz d'isolation et ainsi maintenir un rapport quasi-constant entre la pression à l'intérieur de l'installation et la pression à l'extérieur.

L'invention a donc pour but de remédier à ces inconvénients en proposant un nouveau procédé de distribution d'un mélange adapté pour assurer une isolation électrique et/ou couper un arc électrique dans une enceinte d'un appareil électrique haute ou moyenne tension.

### PRESENTATION GENERALE DE L'INVENTION

Afin d'éliminer au moins certains de ces inconvénients, l'invention concerne un procédé de distribution d'un mélange adapté pour assurer une isolation électrique et/ou couper un arc électrique dans une enceinte d'un appareil électrique haute ou moyenne tension, le mélange comprenant au moins un produit chimique organique de coupure électrique et au moins un produit de dilution, le mélange étant stocké dans un récipient, le procédé comprenant :
- une étape de refroidissement dudit mélange à une température inférieure à -10°C,
- une étape de vidange du récipient contenant le mélange refroidi, le mélange refroidi (M) étant liquide suite à la vidange, le procédé comporte une étape d'évaporation dudit mélange (M) puis
- une étape de distribution du mélange dans l'enceinte de l'appareil électrique haute ou moyenne tension.

Grâce à l'invention, le dosage du produit chimique organique de coupure électrique et du produit de dilution est précis étant donné que le mélange est essentiellement en phase liquide lors de la vidange du récipient. Grâce à l'invention, la variation de concentration est inférieure à 2% poids, ce qui est très avantageux.

De plus, grâce à l'invention, une plus grande quantité du mélange est exploitable. Le rendement de distribution est ainsi amélioré. En outre, l'étape de vidange et de distribution peuvent être réalisées de manière rapide.

De manière préférée, la pression de vapeur saturante à 20°C du produit de dilution est au moins 10 fois supérieure à la pression de vapeur saturante à 20°C du produit chimique organique de coupure électrique.

De préférence, le mélange est refroidi à une température inférieure à -20°C de manière à permettre un dosage précis lors de la vidange de la phase liquide du mélange.

De manière préférée, le produit chimique organique de coupure électrique a une pression de vapeur saturante à 20°C comprise entre 0,4 bar (400 hPa) et 5 bar (5000 hPa), de préférence, comprise entre 0,4 bar (400 hPa) et 4 bar (4000 hPa).

De préférence encore, le produit de dilution a une pression de vapeur saturante à 20°C comprise entre 50 bar (50000 hPa) et 70 bar (70000 hPa).

Selon un aspect préféré, le mélange comporte une concentration en poids de produit chimique organique de coupure électrique comprise entre 10% et 80%.

De préférence, le produit chimique organique de coupure électrique possède un potentiel de réchauffement planétaire, plus connu de l'homme du métier sous son acronyme PRP, inférieur à 2500. Le potentiel de réchauffement planétaire PRP d'un produit chimique organique est défini dans le 4ème rapport du groupe d'experts intergouvernemental sur l'évolution du climat et repris entre autres dans le dernier règlement de l'union européenne RÈGLEMENT (UE) N°517/2014 DU PARLEMENT EUROPÉEN ET DU CONSEIL du 16 avril 2014, mais aussi fourni par les producteurs desdits produits chimiques organiques.

De préférence, le produit chimique organique de coupure électrique est sélectionné parmi l'heptafluoroisobutyronitrile (C₄F₇N), le tetrafluoropropene (C₃F₄H₂) ou un mélange decafluoro-2,methylbutane-3,one (C₅F₁₀O). De tels produits chimiques organiques sont plus respectueux de l'environnement que le gaz SF₆, ce qui est avantageux.

De préférence, le produit de dilution est le dioxyde de carbone qui est un gaz liquéfié lorsqu'il est stocké sous pression, par exemple, dans un récipient. Un tel produit permet avantageusement de stabiliser un produit de coupure électrique.

Le mélange refroidi étant liquide suite à la vidange, le procédé comporte une étape d'évaporation dudit mélange préalablement à sa distribution dans l'enceinte de l'appareil électrique haute ou moyenne tension. Le dosage de la phase liquide du mélange est précis et assure une distribution gazeuse optimale dans l'enceinte. En effet, il n'est pas accepté que le mélange comporte une phase liquide dans l'enceinte.

L'invention concerne également un système de distribution d'un mélange adapté pour assurer une isolation électrique et/ou couper un arc électrique dans une enceinte d'un appareil électrique haute ou moyenne tension, le mélange comprenant au moins un produit chimique organique de coupure électrique et au moins un produit de dilution, le système comprenant au moins un récipient dans lequel est stocké le mélange, des moyens de refroidissement dudit récipient à une température inférieure à -10°C et un circuit de liaison fluidique du récipient à ladite enceinte, le circuit de liaison fluidique comprenant des moyens d'évaporation dudit mélange.

L'invention vise également un chariot mobile comportant un système de distribution tel que présenté précédemment. De préférence, le chariot comporte des moyens de tirage du vide afin de faire le vide dans l'enceinte étanche avant la distribution.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un procédé de distribution avec un circuit mélangeur ; et
- la figure 2 est une représentation schématique d'un système de distribution selon l'invention.

Il faut noter que les figures exposent l'invention de manière détaillée pour la mettre en oeuvre, lesdites figures pouvant bien entendu servir à mieux définir l'invention le cas échéant.

### DESCRIPTION D'UN OU PLUSIEURS MODES DE REALISATION ET DE MISE EN ŒUVRE

L'invention va être dorénavant présentée pour la distribution d'un mélange adapté pour assurer une isolation électrique et/ou couper un arc électrique dans une enceinte d'un appareil électrique haute ou moyenne tension.

Par «moyenne tension», on entend une tension qui est supérieure à 1000 volts en courant alternatif et à 1500 volts en courant continu mais qui ne dépasse pas 52 000 volts en courant alternatif et 75 000 volts en courant continu. De manière analogue, on entend par « haute tension » une tension qui dépasse 52 000 volts en courant alternatif et 75 000 volts en courant continu.

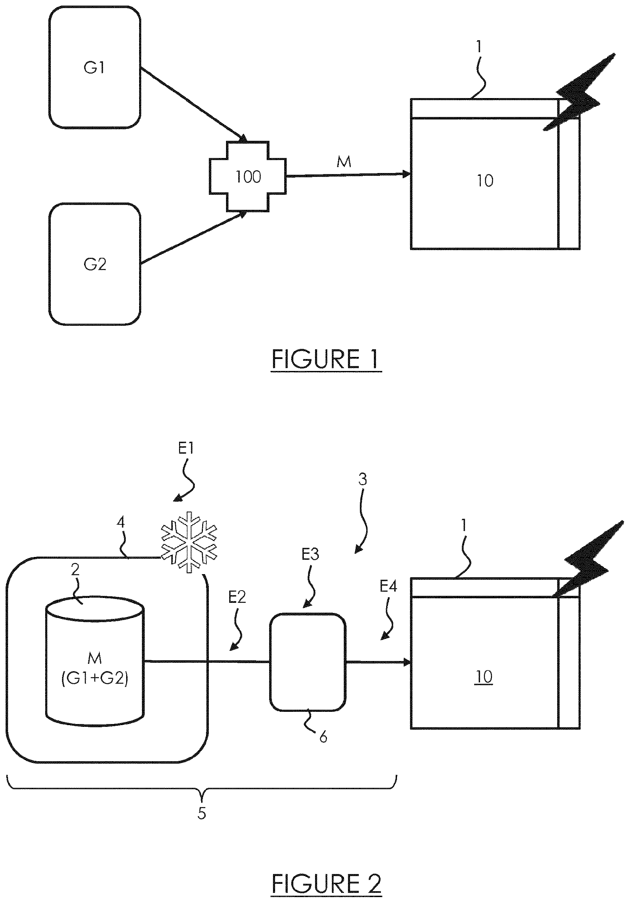

Dans cet exemple, l'appareil électrique est un transformateur électrique à isolation gazeuse, comme par exemple un transformateur d'alimentation ou un transformateur de mesure, ou un appareil électrique de connexion/déconnexion (également connu sous la désignation d'appareil de coupure) qui est relié au réseau électrique. En référence à la figure 2, l'appareil électrique 1 comporte une enceinte étanche 10 dans laquelle sont logés des composants électriques (non représentés) adaptés pour permettre une déconnexion électrique. L'enceinte étanche 10 est vide et doit être remplie d'un mélange M afin d'assurer une isolation électrique et/ou couper un arc électrique. Un tel appareil électrique 1 est connu de l'homme du métier et ne sera pas présenté plus en détails.

Selon l'invention, en référence à la figure 2, le mélange M comporte au moins un produit chimique organique de coupure électrique G1 et au moins un produit de dilution G2. La pression de vapeur saturante des produits G1, G2 à 20°C est différente comme cela sera présenté par la suite. En particulier, la pression de vapeur saturante du produit de dilution G2 est au moins 10 fois supérieure à la pression de vapeur saturante du produit chimique organique de coupure électrique G1, de préférence, au moins 40 fois.

De manière préférée, le produit chimique organique de coupure électrique G1 est un gaz respectueux de l'environnement. De préférence, le produit chimique organique de coupure électrique G1 a une pression de vapeur saturante à 20°C comprise entre 0,4 bar (400 hPa) et 5 bar (5000 hPa). A titre d'exemple, le produit de coupure électrique G1 est sélectionné parmi l'heptafluoroisobutyronitrile (C₄F₇N), le tetrafluoropropene (C₃FaH₂) ou un mélange decafluoro-2,methylbutane-3,one (C₅F₁₀O).

Le produit de dilution G2 permet de stabiliser le produit de coupure électrique G1. De préférence, le produit de dilution G2 est du dioxyde de carbone et possède une pression de vapeur saturante à 20°C de l'ordre de 58 bar (58 000 hPa). Le dioxyde de carbone G2 permet de former un mélange d'isolation électrique stable lorsqu'il est mélangé avec le produit de coupure électrique G1.

De préférence, le mélange M comporte une concentration en poids de produit de coupure électrique G1 comprise entre 10 % à 80 %.

De manière classique, suite à leur production, le produit de coupure électrique G1 et le produit de dilution G2 sont stockés de manière séparée dans des récipients individuels, en particulier, sous forme liquide de manière à diminuer leur encombrement et ainsi faciliter la logistique et le transport.

Pour former un mélange M destiné à l'appareil électrique 1, le produit de coupure électrique G1 et le produit de dilution G2 sont mélangés et dosés précisément avant d'être conditionnés dans un récipient 2 comme illustré à la figure 2. De manière préférée, ces opérations de mélange sont réalisées en phase liquide à température ambiante. De manière préférée, le dosage et le mélange des deux produits G1, G2 est réalisé dans une installation industrielle de manière précise et contrôlée. Le récipient 2 se présente, par exemple, sous la forme d'une bouteille ou d'un fût à pression de 5 litres à 500 litres.

A titre d'exemple, le récipient 2 comporte un mélange M comprenant, d'une part, 27% d'heptafluoroisobutyronitrile (C₄F₇N) comme produit de coupure électrique G1 et, d'autre part, 73% de dioxyde de carbone (CO₂) comme produit de dilution G2. A température ambiante 20°C, le récipient 2 comporte une phase gazeuse et une phase liquide. Le récipient 2 peut ensuite être chargé sur un véhicule de transport afin d'être acheminé jusqu'à l'appareil électrique 1 pour être distribué.

En référence à la figure 2, il est présenté un système de distribution 3 comportant un récipient 2 dans lequel est stocké le mélange M, des moyens de refroidissement 4 dudit récipient 2 à une température inférieure à -10°C et un circuit de liaison fluidique 5 du récipient 2 à ladite enceinte 10, le circuit de liaison fluidique 5 comprenant en outre des moyens d'évaporation 6 dudit mélange M afin que celui-ci soit gazeux dans ladite enceinte 10.

En référence à la figure 2, les moyens de refroidissement 4 permettent de refroidir le récipient 2 afin que le mélange M soit à une température inférieure à -10°C. Dans cet exemple, les moyens de refroidissement 4 se présentent sous la forme d'un groupe froid connu de l'homme du métier mais il va de soi que d'autres types de moyens de refroidissement pourraient convenir, par exemple, utilisation d'un fluide frigoporteur, d'un système de Pelletier, d'un système cryogénique, d'un système à glace carbonique, etc.

Toujours en référence à la figure 2, le système de distribution 3 comporte un circuit de liaison fluidique 5 reliant le récipient 2 à l'enceinte 10. Dans cet exemple de réalisation, le circuit de liaison fluidique 5 comporte une pluralité de canalisations dans lesquelles le mélange M peut circuler à l'état gazeux ou liquide comme cela sera présenté par la suite. De préférence, le circuit de liaison fluidique 5 comporte en outre des vannes pour commander la distribution.

De manière préférée, le circuit de liaison fluidique 5 comporte en outre des moyens d'évaporation 6 dudit mélange M qui sont configurés pour transformer le mélange M à l'état liquide en mélange M à l'état gazeux apte à remplir l'enceinte étanche 10. Dans cet exemple, les moyens d'évaporation 6 se présentent sous la forme d'un évaporateur électrique, un évaporateur réchauffeur électrique, un évaporateur atmosphérique, un évaporateur à bain d'huile, etc.

De préférence encore, le circuit de liaison fluidique 5 comporte en outre des moyens de régulation pour contrôler la vidange du récipient 2. A titre d'exemple, les moyens de régulation sont configurés pour stopper la vidange en cas d'élévation de la température du récipient 2. De préférence également, les moyens de régulation sont configurés pour peser le récipient 2 et stopper la vidange quand la masse mesurée est inférieure à une masse prédéterminée. Un tel contrôle permet de s'assurer que seule la phase liquide du récipient 2 est distribuée.

Un exemple de mise en oeuvre de l'invention va dorénavant être présenté.

A titre d'exemple, le récipient 2 comporte un mélange M comportant 27% en poids d'heptafluoroisobutyronitrile (C₄F₇N) (pression de vapeur saturante à 20°C = 2,53 bar (2530 hPa)) et 73% en poids de dioxyde de carbone (CO₂) (pression de vapeur saturante à 20°C = 57,3 bar (57300 hPa)).

Selon l'invention, en référence à la figure 2, le procédé de distribution comporte une étape de refroidissement (E1) dudit récipient 2 de mélange M par les moyens de refroidissement 4 à une température inférieure à -20°C.

Le procédé comporte en outre une étape de vidange E2 du récipient 2 contenant le mélange refroidi M dans le circuit de liaison fluidique 5. Comme le récipient 2 est refroidi de manière importante, le récipient 2 comporte très majoritairement une phase liquide dans laquelle les concentrations des produits G1, G2 sont définies de manière précise. Aussi, lors de l'étape de vidange E2, le mélange M est à l'état liquide dans le circuit de liaison fluidique 5, les concentrations en poids des produits G1, G2 ne variant que faiblement.

Ensuite, le procédé comporte une étape d'évaporation E3 du mélange M à l'état liquide par les moyens d'évaporation 6 afin que le mélange M soit à l'état gazeux. Le mélange gazeux M, dont le dosage est précis, est ensuite distribué (étape E4) dans l'enceinte 10 de l'appareil électrique haute ou moyenne tension 1. Le mélange M peut ainsi remplir sa fonction de manière optimale.

Grâce à l'invention, les inconvénients de l'art antérieur sont ainsi supprimés. De manière avantageuse, un seul récipient 2 peut alimenter plusieurs appareils électriques 1 étant donné que le dosage est constant, ce qui permet de réaliser des économies importantes.

De manière préférée, le mélange de gaz M est refroidi à une température inférieure à -20°C afin de réaliser une distribution dont le dosage varie très faiblement (moins de 2%). De plus, la quantité de mélange M pouvant être extraite du récipient 2 est importante (supérieure à 85%) étant donné que la phase liquide est prépondérante, ce qui améliore la rentabilité par rapport à l'art antérieur.

L'invention concerne également un chariot mobile comportant un tel système de distribution afin de permettre d'une part de vidanger le milieu gazeux de l'enceinte 10 avant de le remplacer par un nouveau milieu gazeux. A cet effet, le chariot mobile comporte en outre des moyens de tirage du vide d'air afin de retirer tout le milieu gazeux existant avant de distribuer le mélange M.

## Revendications

1. Procédé de distribution d'un mélange (M) adapté pour assurer une isolation électrique et/ou couper un arc électrique dans une enceinte (10) d'un appareil électrique haute ou moyenne tension (1), le mélange (M) comprenant au moins un produit chimique organique de coupure électrique (G1) et au moins un produit de dilution (G2), le mélange (M) étant stocké dans un récipient (2), le procédé comprenant :
- une étape de refroidissement dudit mélange (M) à une température inférieure à -10°C,
- une étape de vidange du récipient (2) contenant le mélange (M) refroidi, le mélange refroidi (M) étant liquide suite à la vidange,
- le procédé comporte une étape d'évaporation dudit mélange (M) puis
- une étape de distribution du mélange (M) dans l'enceinte (10) de l'appareil électrique haute ou moyenne tension (1).

2. Procédé de distribution selon la revendication 1 dans lequel, la pression de vapeur saturante à 20°C du produit de dilution (G2) est au moins 10 fois supérieure à la pression de vapeur saturante à 20°C du produit chimique organique de coupure électrique (G1).

3. Procédé de distribution selon l'une des revendications 1 et 2, dans lequel le mélange (M) est refroidi à une température inférieure à -20°C.

4. Procédé de distribution selon l'une des revendications 1 à 3, dans lequel le produit chimique organique de coupure électrique (G1) a une pression de vapeur saturante à 20°C comprise entre 0,4 bar (400 hPa) et 5 bar (5000 hPa).

5. Procédé de distribution selon l'une des revendications 1 à 4, dans lequel le produit de dilution (G2) a une pression de vapeur saturante à 20°C comprise entre 50 bar (50000 hPa) et 70 bar (70000 hPa).

6. Procédé de distribution selon l'une des revendications 1 à 5, dans lequel le mélange (M) comporte une concentration en poids de produit chimique organique de coupure électrique (G1) comprise entre 10% et 80%.

7. Procédé de distribution selon l'une des revendications 1 à 6, dans lequel le produit de dilution (G2) est le dioxyde de carbone.

8. Procédé de distribution selon l'une des revendications 1 à 7, dans lequel, le produit chimique organique de coupure électrique (G1) est sélectionné parmi l'heptafluoroisobutyronitrile (C₄F₇N), le tetrafluoropropene (C₃F₄H₂) ou un mélange decafluoro-2,methylbutane-3,one (C₅F₁₀O).

9. Système de distribution d'un mélange (M) adapté pour assurer une isolation électrique et/ou couper un arc électrique dans une enceinte (10) d'un appareil électrique haute ou moyenne tension (1), le mélange (M) comprenant au moins un produit chimique organique de coupure électrique (G1) et au moins un produit de dilution (G2), le système comprenant au moins un récipient (2) dans lequel est stocké le mélange (M), des moyens de refroidissement dudit récipient (2) à une température inférieure à -10°C et un circuit de liaison fluidique (5) du récipient (2) à ladite enceinte (10), le circuit de liaison fluidique (5) comprenant des moyens d'évaporation dudit mélange (M).

## Patentansprüche

1. Verfahren zur Verteilung einer Mischung (M), die geeignet ist, eine elektrische Isolierung sicherzustellen und/oder einen Lichtbogen in einem Gehäuse (10) eines elektrischen Hoch- oder Niederspannungsgeräts (1) zu unterbrechen, wobei die Mischung (M) mindestens ein organisches chemisches elektrisches Unterbrechungsprodukt (G1) und mindestens ein Verdünnungsprodukt (G2) umfasst, wobei die Mischung (M) in einem Behälter (2) gespeichert ist, wobei das Verfahren umfasst:
- einen Kühlschritt der Mischung (M) auf eine Temperatur unter -10 °C,
- einen Entleerungsschritt des Behälters (2), der die gekühlte Mischung (M) enthält, wobei die gekühlte Mischung (M) infolge der Entleerung flüssig ist,
- wobei das Verfahren einen Verdampfungsschritt der Mischung (M) aufweist, dann
- einen Verteilungsschritt der Mischung (M) im Gehäuse (10) des elektrischen Hoch- oder Niederspannungsgeräts (1).

2. Verteilungsverfahren nach Anspruch 1, wobei der Sättigungsdampfdruck bei 20 °C des Verdünnungsprodukts (G2) mindestens 10-mal höher als der Sättigungsdampfdruck bei 20 °C des organischen chemischen elektrischen Unterbrechungsprodukts (G1) ist.

3. Verteilungsverfahren nach einem der Ansprüche 1 und 2, wobei die Mischung (M) auf eine Temperatur unter -20 °C gekühlt wird.

4. Verteilungsverfahren nach einem der Ansprüche 1 bis 3, wobei das organische chemische elektrische Unterbrechungsprodukt (G1) einen Sättigungsdampfdruck bei 20 °C hat, der zwischen 0,4 bar (400 hPa) und 5 bar (5000 hPa) liegt.

5. Verteilungsverfahren nach einem der Ansprüche 1 bis 4, wobei das Verdünnungsprodukt (G2) einen Sättigungsdampfdruck bei 20 °C hat, der zwischen 50 bar (50000 hPa) und 70 bar (70000 hPa) liegt.

6. Verteilungsverfahren nach einem der Ansprüche 1 bis 5, wobei die Mischung (M) eine Konzentration in Gewicht des organischen chemischen elektrischen Unterbrechungsprodukts (G1) aufweist, die zwischen 10 % und 80 % liegt.

7. Verteilungsverfahren nach einem der Ansprüche 1 bis 6, wobei das Verdünnungsprodukt (G2) Kohlendioxid ist.

8. Verteilungsverfahren nach einem der Ansprüche 1 bis 7, wobei das organische chemische elektrische Unterbrechungsprodukt (G1) aus Heptafluoroisobutyronitril (C₄F₇N), Tetrafluoropropen (C₃F₄H₂) oder einer Decafluoro-2, methylbutan-3, one-Mischung (C₅F₁₀O) ausgewählt ist.

9. System zur Verteilung einer Mischung (M), die geeignet ist, eine elektrische Isolierung sicherzustellen und/oder einen Lichtbogen in einem Gehäuse (10) eines elektrischen Hoch- oder Niederspannungsgeräts (1) zu unterbrechen, wobei die Mischung (M) mindestens ein organisches chemisches elektrisches Unterbrechungsprodukt (G1) und mindestens ein Verdünnungsprodukt (G2) umfasst, wobei das System mindestens einen Behälter (2) umfasst, in dem die Mischung (M) gespeichert ist, Kühlmittel des Behälters (2) auf eine Temperatur unter -10 °C und einen Verbindungs-Fluidkreis (5) des Behälters (2) mit dem Gehäuse (10), wobei der Verbindungs-Fluidkreis (5) Verdampfungsmittel der Mischung (M) umfasst.

## Claims

1. A method for dispensing a mixture (M) adapted to ensure electric insulation and/or shut off an electric arc in an enclosure (10) of a high or medium voltage electric apparatus (1), the mixture (M) comprising at least one electric shut-off organic chemical product (G1) and at least one dilution product (G2), the mixture (M) being stored in a container (2), the method comprising:
- a step of cooling said mixture (M) to a temperature of less than -10 °C,
- a step of draining the container (2) containing the mixture (M) cooled, the mixture (M) cooled being liquid following draining,
- the method comprises a step of evaporating said mixture (M) and then
- a step of dispensing the mixture (M) in the enclosure (10) of the high or medium voltage electric apparatus (1).

2. The dispensing method according to claim 1, wherein the saturation vapour pressure at 20°C of the dilution product (G2) is at least 10 times greater than the saturation vapour pressure at 20°C of the electric shut-off organic chemical product (G1).

3. The dispensing method according to one of claims 1 to 2, wherein the mixture (M) is cooled to a temperature of less than -20 °C.

4. The dispensing method according to one of claims 1 to 3, wherein the electric shut-off organic chemical product (G1) has a saturation vapour pressure at 20°C of between 0.4 bar (400 hPa) and 5 bar (5,000 hPa).

5. The dispensing method according to one of claims 1 to 4, wherein the dilution product (G2) has a saturation vapour pressure at 20°C of between 50 bar (50,000 hPa) and 70 bar (70,000 hPa).

6. The dispensing method according to one of claims 1 to 5, wherein the mixture (M) comprises a weight concentration of electric shut-off organic chemical product (G1) of between 10 % and 80 %.

7. The dispensing method according to one of claims 1 to 6, wherein the dilution product (G2) is carbon dioxide.

8. The dispensing method according to one of claims 1 to 7, wherein the electric shut-off organic chemical product (G1) is selected from heptafluoroisobutylronitrile (C₄F₇N), tetrafluoropropene (C₃F₄H₂) or a decafluoro-2, methylbutane-3, one mixture (C₅F₁₀O).

9. A system for dispensing a mixture (M) adapted to ensure electric insulation and/or shut off an electric arc in an enclosure (10) of a high or medium voltage electric apparatus (1), the mixture (M) comprising at least one electric shut-off organic chemical product (G1) and at least one dilution product (G2), the system comprising at least one container (2) in which the mixture (M) is stored, means for cooling said mixture (2) to a temperature of less than -10°C and a circuit (5) for fluidly connecting the container (2) to said enclosure (10), the fluid connection circuit (5) comprising means for evaporating said mixture (M).
